# EUROPÄISCHE PATENTANMELDUNG

(11) **EP 4 790 288 A1**
(43) Veröffentlichungstag der Anmeldung: **12.08.2026**
(21) Anmeldenummer: 26154933.1
(22) Anmeldetag: 29.01.2026
(51) Int. Cl.: F16K 31/04, H02K 5/128, H02K 15/14

(54) **KÄLTEMITTELVENTIL UND VERFAHREN ZUR HERSTELLUNG EINES KÄLTEMITTELVENTILS**

(30) Priorität: 05.02.2025 DE 102025104219
(71) Anmelder: Volkswagen Aktiengesellschaft, 38440 Wolfsburg (DE)
(72) Erfinder: Kriegel, Kai Mario, 38440 Wolfsburg (DE); Schiller, Heino, 38440 Wolfsburg (DE); Bode, Behrend, 38440 Wolfsburg (DE)

(57) **Zusammenfassung**

Um ein Kältemittelventil mit einem Elektromotor und einem Spalttopf bereitzustellen, bei dem der wirksame magnetische Widerstand zwischen Stator und Rotor verringert ist, wird ein Kältemittelventil (100) umfassend ein Ventilgehäuse (11), einen Spalttopf (12) und einen Elektromotor (13) mit einem Rotor (14) und einem Stator (15) vorgeschlagen, wobei der Rotor (14) in dem Spalttopf (12) angeordnet ist und wobei der Spalttopf (12) in dem Stator (15) angeordnet ist, wobei vorgesehen ist, dass der Spalttopf (12) erste Bereiche (22) mit einer ersten magnetischen Permeabilitätszahl und zweite Bereiche (23) mit einer zweiten magnetischen Permeabilitätszahl aufweist, und dass die zweite magnetische Permeabilitätszahl größer ist als die erste magnetische Permeabilitätszahl.

## Beschreibung

Die vorliegende Erfindung betrifft ein Kältemittelventil umfassend ein Ventilgehäuse, einen Spalttopf und einen Elektromotor mit einem Rotor und einem Stator, wobei der Rotor in dem Spalttopf angeordnet ist, und wobei der Spalttopf in dem Stator angeordnet ist.

Ferner betrifft die vorliegende Erfindung ein Verfahren zur Herstellung eines Kältemittelventils.

In Kältemittelsystemen, insbesondere in Kältemittelsystemen für Kraftfahrzeuge, sind in der Regel mehrere Kältemittelventile verbaut. Kältemittelventile weisen einen kältemittelführenden Teil in Form eines mechanischen Ventilmechanismus und einen Elektromotor zur Ansteuerung des Ventilmechanismus auf. Bei Kältemittelventilen, welche für hohe Drücke ausgelegt sind, erfolgt eine Trennung zwischen dem kältemittelführenden Teil und dem "Trockenraum" meist zwischen dem Stator und dem Rotor des Elektromotors. Hierfür ist der Rotor in einem druckstabilen Spalttopf angeordnet, und der Stator ist außerhalb des Spalttopfes angeordnet. Der Rotor läuft dann im Kältemittel, und der Stator befindet sich im Trockenraum des Kältemittelventils. Dabei muss der Spalttopf relativ dickwandig ausgeführt sein, um den auftretenden Drücken standzuhalten. Dies hat zur Folge, dass der wirksame magnetische Widerstand zwischen Stator und Rotor sehr groß ist. Im Stand der Technik ist daher der Elektromotor zur Bereitstellung der benötigten Leistung überdimensioniert ausgeführt.

Aus der EP 3 065 265 A1 ist ein elektrischer Motor mit eingebettetem Permanentmagneten für ein Kältemittelventil bekannt, umfassend einen Statorkern, der innerhalb eines Rahmens angeordnet ist, ein hinteres Joch, eine Vielzahl von Magnetpolzähnen, einen Rotor, der an einem Innendurchmesser der Vielzahl von Magnetpolzähnen angeordnet ist, und eine Vielzahl von Kompressionsabschnitten, in denen eine Druckspannung auftritt, welche höher ist als die Druckspannung, die in dem Joch aufgrund der zwischen dem Rahmen und dem hinteren Joch herrschenden Druckkraft auftritt.

Die JP 2021 136748 A offenbart einen Motor mit Permanentmagneten, umfassend einen geteilten Rotorkern aus zwei Rotorkernteilen.

Die JP 2001 159473 A offenbart ein elektrisch betriebenes Regelventil zur Verwendung in einem Kühlkreislauf mit Ammoniak als Kühlmedium, welches einen rostfreien Ventilkörper und ein geschlossenes Gehäuse aufweist, die beide durch Widerlagerschweißen miteinander verbunden sind, wobei im geschlossenen Gehäuse eine rostfreie Hülse mit einem integrierten Magneten auf eine rostfreie Führung geschraubt ist.

Der vorliegenden Erfindung liegt die Aufgabe zugrunde, ein Kältemittelventil mit einem Elektromotor und einem Spalttopf bereitzustellen, bei dem der wirksame magnetische Widerstand zwischen Stator und Rotor verringert ist.

Zur Lösung der der Erfindung zugrundeliegenden Aufgabe wird ein Kältemittelventil umfassend ein Ventilgehäuse, einen Spalttopf und einen Elektromotor mit einem Rotor und einem Stator vorgeschlagen, wobei der Rotor in dem Spalttopf angeordnet ist, und wobei der Spalttopf in dem Stator angeordnet ist, wobei ferner vorgesehen ist, dass der Spalttopf erste Bereiche mit einer ersten magnetischen Permeabilitätszahl und zweite Bereiche mit einer zweiten magnetischen Permeabilitätszahl aufweist, und dass die zweite magnetische Permeabilitätszahl größer ist als die erste magnetische Permeabilitätszahl.

Durch die Anordnung des Spalttopfs zwischen dem Rotor und dem Stator erfolgt eine fluidische Trennung zwischen Rotor und Stator. Dies kann bedeuten, dass der Rotor im kältemittelführenden Teil des Kältemittelventils angeordnet ist, und dass der Stator im trockenen Bereich oder "Trockenraum" des Kältemittelventils angeordnet ist.

Das Kältemittelventil kann ein Gehäuse umfassen, in welchem der Elektromotor angeordnet ist. Das Kältemittelventil kann zudem ein Ventilgehäuse umfassen, wobei das Ventilgehäuse einen Kühlmittelkanal aufweist, wobei in dem Kühlmittelkanal eine Ventilnadel angeordnet ist, und wobei ferner der Elektromotor zum Verfahren der Ventilnadel in dem Kühlmittelkanal ausgebildet ist. Durch Verfahren der Ventilnadel in dem Kühlmittelkanal mittels des Elektromotors kann die Durchflussmenge eines Kältemittels durch den Kältemittelkanal gesteuert werden. Das Ventilgehäuse ist bevorzugt mit dem Gehäuse verbunden.

Erfindungsgemäß ist vorgesehen, dass der Spalttopf erste Bereiche mit einer ersten magnetischen Permeabilitätszahl und zweite Bereiche mit einer zweiten magnetischen Permeabilitätszahl aufweist, wobei die zweite magnetische Permeabilitätszahl größer ist als die erste magnetische Permeabilitätszahl.

Die ersten Bereiche und die zweiten Bereiche sind bevorzugt Abschnitte der Wandung des Spalttopfes.

Durch das Vorsehen von ersten Bereichen mit einer ersten geringeren magnetischen Permeabilitätszahl und zweiten Bereichen mit einer zweiten höheren magnetischen Permeabilitätszahl kann ein idealer Verlauf von Magnetfeldlinien erzielt werden. Dabei ermöglichen die ersten Bereiche mit der ersten geringeren magnetischen Permeabilitätszahl, dass der magnetische Fluss des Stators nicht im Spalttopf geschlossen wird, sondern mit dem Rotor interagiert. Zudem wird der wirksame magnetische Widerstand zwischen Stator und Rotor aufgrund der ersten Bereiche mit der geringeren ersten magnetischen Permeabilitätszahl verringert. Der Elektromotor des Kältemittelventils kann daher kleiner dimensioniert werden als bei aus dem Stand der Technik bekannten Kältemittelventilen.

Es können mehrere erste Bereiche und mehrere zweite Bereiche vorgesehen sein.

Bevorzugt ist vorgesehen, dass die ersten Bereiche und die zweiten Bereiche in einer Umfangsrichtung des Spalttopfes abwechselnd angeordnet ist.

Somit sind zwischen den zweiten Bereichen mit der größeren zweiten magnetischen Permeabilitätszahl stets erste Bereiche mit einer geringeren ersten magnetischen Permeabilitätszahl vorhanden.

Dabei kann vorgesehen sein, dass die zweiten Bereiche mit der zweiten größeren magnetischen Permeabilitätszahl durch lokale Erwärmung des Spalttopfes hergestellt sind. Beispielsweise kann der Spalttopf aus einem Metall bestehen, welches eine geringe Permeabilitätszahl aufweist, beispielsweise Edelstahl. Durch eine starke lokale Erwärmung des Spalttopfes in den zweiten Bereichen wird dann das austenitische Metallgefüge lokal so verändert, dass sich die magnetische Permeabilitätszahl in den zweiten Bereichen lokal dauerhaft von der magnetischen Permeabilitätszahl in den ersten Bereichen unterscheidet. Die lokale Erwärmung des Spalttopfes in den zweiten Bereichen kann beispielsweise durch Lasererwärmung erfolgen. Grundsätzlich sind jedoch auch andere Verfahren zur lokalen Erwärmung des Spalttopfes geeignet. Alternativ kann auch vorgesehen sein, dass der Spalttopf aus mindestens zwei Materialkomponenten besteht, wobei die Komponenten eine unterschiedliche Permeabilitätszahl aufweisen. Zur Herstellung des Spalttopfes können die beiden Komponenten entsprechend miteinander verbunden, insbesondere verschweißt, werden, um somit erste Bereiche mit einer ersten magnetischen Permeabilitätszahl und zweite Bereiche mit einer zweiten magnetischen Permeabilitätszahl auszubilden.

Mit weiterem Vorteil ist vorgesehen, dass der Stator ein Klauenstator umfassend eine Vielzahl von Klauen ist, und dass die Klauen des Klauenstators in einer Radialrichtung an den zweiten Bereichen angeordnet sind.

Somit sind Stator und Spalttopf gerichtet zueinander angeordnet, sodass sich die Positionen der Klauen in der Radialrichtung über den zweiten Bereichen des Spalttopfes mit der zweiten größeren magnetischen Permeabilitätszahl befinden.

Ferner kann vorgesehen sein, dass der Stator, insbesondere die Klauen des Klauenstators, eine Vielzahl von Statorblechen umfasst.

Eine weitere Lösung der der Erfindung zugrundeliegenden Aufgabe besteht in einem Kältemittelkreislauf umfassend mindestens ein vorbeschriebenes Kältemittelventil. Eine noch weitere Lösung der der Erfindung zugrundeliegenden Aufgabe besteht in einem Kraftfahrzeug, insbesondere einem batterieelektrischen Fahrzeug, mit einem vorbeschriebenen Kältemittelkreislauf.

Eine weitere Lösung der der Erfindung zugrundeliegenden Aufgabe besteht in einem Verfahren zur Herstellung eines vorbeschriebenen Kältemittelventils, umfassend die Schritte Bereitstellen eines Spalttopfs aus einem Material mit einer ersten magnetischen Permeabilitätszahl, Bestimmen von ersten Bereichen und zweiten Bereichen des Spalttopfes, lokales Erwärmen des Materials der zweiten Bereiche des Spalttopfes, so dass das Material in den zweiten Bereichen ein zweite magnetische Permeabilitätszahl aufweist, wobei die zweite magnetische Permeabilitätszahl größer ist als die erste magnetische Permeabilitätszahl, Anordnen des Spalttopfes in einem Stator und Anordnen eines Rotors in dem Spalttopf.

Die ersten und zweiten Bereiche des Spalttopfes werden bevorzugt derart bestimmt, dass in dem verfahrensgemäß hergestellten Kältemittelventil ein idealer Verlauf von Magnetfeldlinien erzielt wird. Im darauffolgenden Schritt wird das Material in den bestimmten zweiten Bereichen des Spalttopfes lokal, insbesondere stark, erwärmt.

Bevorzugt kann ferner vorgesehen sein, dass ein Ventilgehäuse mit einem Kältemittelkanal und einer darin angeordneten Ventilnadel bereitgestellt wird, und dass eine Rotorwelle des Rotors derart mit der Ventilnadel verbunden wird, sodass diese durch Betrieb des Elektromotors in dem Kältemittelkanal des Ventilgehäuses verfahren werden kann.

Mit weiterem Vorteil ist bevorzugt vorgesehen, dass das Material ein Metall, insbesondere Edelstahl, ist, und dass durch das lokale Erwärmen ein, insbesondere austenitisches, Metallgefüge lokal verändert wird.

Das Material weist insbesondere die erste geringere magnetische Permeabilitätszahl auf. Durch das lokale Erwärmen in den zweiten Bereichen des Spalttopfes wird das Metallgefüge lokal verändert, wodurch sich die Permeabilitätszahl des Spalttopfes in den zweiten Bereichen lokal dauerhaft von der ursprünglichen ersten magnetischen Permeabilitätszahl des Materials des Spalttopfes unterscheidet.

Dabei kann bevorzugt vorgesehen sein, dass das lokale Erwärmen mittels eines Lasers, bevorzugt von einer Innenseite und/oder einer Außenseite des Spalttopfes, erfolgt.

Insbesondere bevorzugt erfolgt dabei das lokale Erwärmen sowohl von der Innenseite als auch von der Außenseite des Spalttopfes. Die Erwärmung der zweiten Bereiche des Spalttopfes mittels eines Lasers ist insbesondere dann vorteilhaft, wenn ein Verbinden des Spalttopfes mit dem Ventilgehäuse in einem Laserschweißverfahren erfolgt, und somit ohnehin ein Laser Einsatz findet. Darüber hinaus kann durch Verwenden eines Lasers zur lokalen Erwärmung der zweiten Bereiche eine Überhitzung und Beeinflussung der benachbarten ersten Bereiche des Stators verhindert werden.

Mit weiterem Vorteil ist vorgesehen, dass der Stator ein Klauenstator umfassend eine Vielzahl von Klauen ist, und dass die ersten Bereiche und die zweiten Bereiche derart bestimmt werden, dass die Klauen des Klauenstators im gebauten Zustand des Kältemittelventils in einer Radialrichtung an den zweiten Bereichen angeordnet sind, wobei bevorzugt ein Abbild der Klauen auf dem Spalttopf, bevorzugt auf der Innenseite und/oder einer Außenseite des Spalttopfes, aufgebracht wird.

Das Muster der ersten und zweiten Bereiche kann dem Muster der Magnetpole, insbesondere der Klauen des Klauenstators, entsprechen.

Ferner bevorzugt kann vorgesehen sein, dass der Stator relativ zum Spalttopf ausgerichtet wird, wobei das Ausrichten mittels komplementären Geometrien des Spalttopfes und des Stators oder unter Verwendung magnetischer Kräfte erfolgt.

Unter den komplementären Geometrien des Spalttopfes und des Stators werden Geometrien des Spalttopfes und des Stators verstanden, welche eine relative Positionierung von Spalttopf und Stator vorgeben. Derartige Geometrien können auch als Poka-Yoke-Geometrien bezeichnet werden. Alternativ oder zusätzlich können auch magnetische Kräfte zur Ausrichtung von Stator und Spalttopf eingesetzt werden. Hierbei werden insbesondere die magnetischen Eigenschaften der durch die lokale Erwärmung ausgebildeten ersten und zweiten Bereiche mit verschiedenen magnetischen Permeabilitätszahlen des Spalttopfes ausgenutzt.

Die Erfindung wird nachstehend näher anhand der beigefügten Figuren erläutert. Es zeigen:
- Fig. 1: einen Längsschnitt durch ein Kältemittelventil,
- Fig. 2: einen Querschnitt entlang der Linie A-A aus Fig. 1 des Kältemittelventils,
- Fig. 3: ein Ablaufdiagramm für ein Verfahren zur Herstellung eines Kältemittelventils, und
- Fig. 4: ein Kraftfahrzeug mit einem Kältemittelkreislauf.

In den Figuren sind gleiche oder einander entsprechende Elemente mit den selben Bezugszeichen gekennzeichnet.

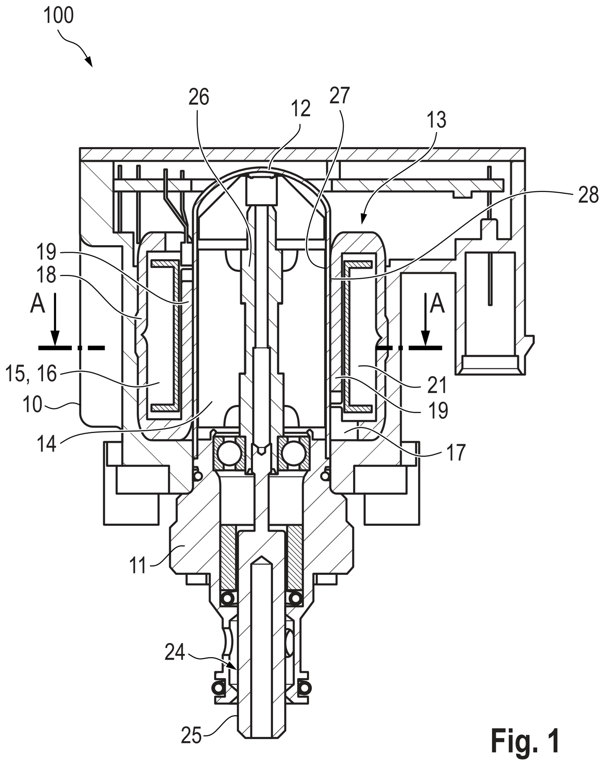

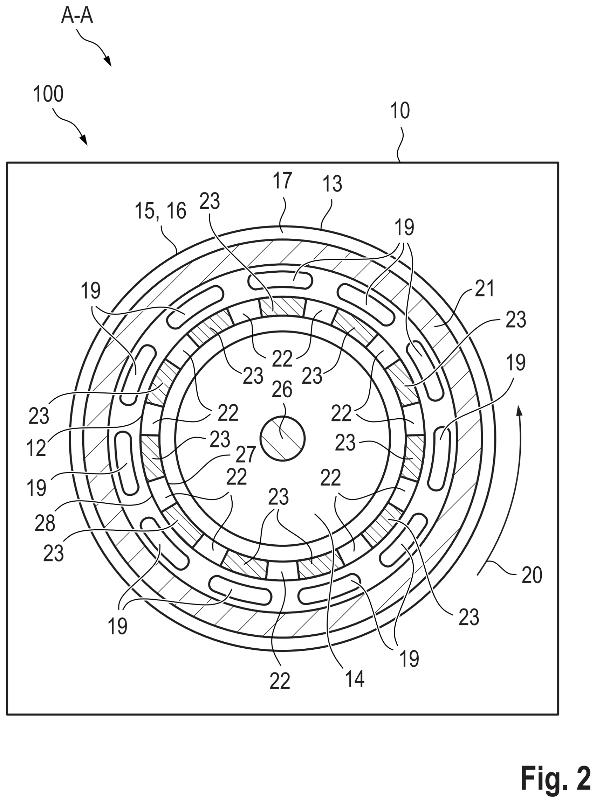

Fig. 1 zeigt eine Längsschnittansicht eines Kältemittelventils 100. In Fig. 2 ist eine Querschnittsansicht des Kältemittelventils 100 entlang der Ebene A-A aus Fig. 1 dargestellt.

Das Kältemittelventil 100 umfasst ein Gehäuse 10, ein Ventilgehäuse 11, einen mit dem Ventilgehäuse 11 verschweißten Spalttopf 12 und einen Elektromotor 13. Der Elektromotor 13 weist einen Rotor 14 und einen Stator 15 auf. Der Rotor 14 ist in dem Spalttopf 12 angeordnet, und der Spalttopf 12 ist wiederum in dem Stator 15 angeordnet. Mittels des Spalttopfes 12 erfolgt eine fluidische Trennung zwischen Rotor 14 und Stator 15, wobei der Rotor 14 im kältemittelführenden Teil angeordnet ist und der Stator 15 sich im Trockenraum des Kältemittelventils 100 befindet. Der Stator 15 ist als Klauenstator 16 ausgebildet und weist zwei Polkörper 17, 18 auf. Jeder der Polkörper 17, 18 umfasst eine Vielzahl von Klauen 19, wobei die Klauen 19 der Polkörper 17, 18 in Umfangsrichtung 20 des Stators 15 abwechselnd angeordnet sind. Die Polkörper 17, 18 inklusive Klauen 19 umschließen eine Spule 21. Wie insbesondere in Fig. 2 erkennbar ist, weist der Spalttopf 12 erste Bereiche 22 mit einer ersten magnetischen Permeabilitätszahl und zweite Bereiche 23 mit einer zweiten magnetischen Permeabilitätszahl auf. Dabei ist die zweite magnetische Permeabilitätszahl größer als die erste magnetische Permeabilitätszahl.

Das Ventilgehäuse 11 weist, wie in Fig. 1 gezeigt, einen Kältemittelkanal 24 auf, wobei in dem Kältemittelkanal 24 eine Ventilnadel 25 angeordnet ist. Der Rotor 14 des Elektromotors 13 weist eine Rotorwelle 26 auf, welche zum Verfahren der Ventilnadel 25 und somit zur Steuerung eines Kältemittelstroms durch den Kältemittelkanal 24 ausgebildet ist. Zurückkehrend zur Fig. 2 ist zu erkennen, dass die ersten Bereiche 22 und die zweiten Bereiche 23 des Spalttopfes 12 in der Umfangsrichtung 20 abwechselnd angeordnet sind. Somit befinden sich zwischen den zweiten Bereichen 23 mit der größeren zweiten magnetischen Permeabilitätszahl stets erste Bereiche 22 mit einer geringeren ersten magnetischen Permeabilitätszahl. Dabei sind die ersten Bereiche 22 und die zweiten Bereiche 23 des Spalttopfes 12 derart angeordnet, dass die Klauen 19 des Klauenstators 16 in einer Radialrichtung an den zweiten Bereichen 23 angeordnet sind.

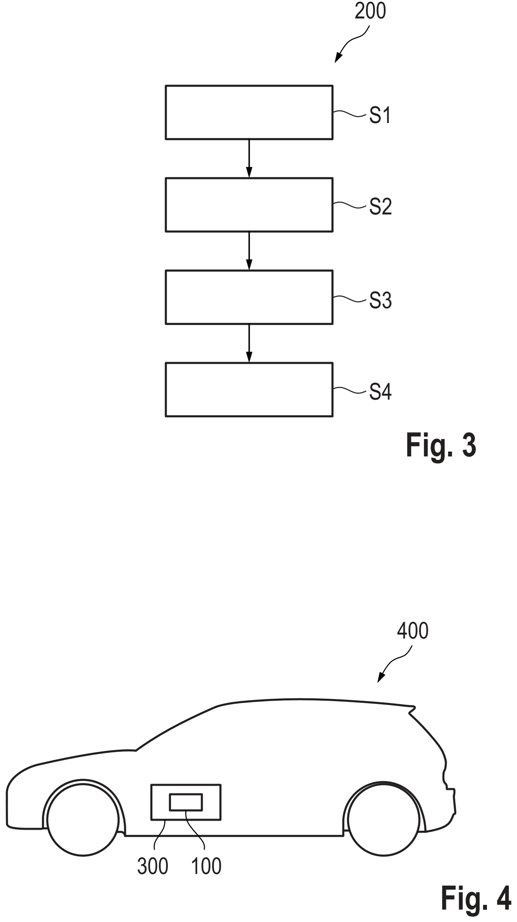

Fig. 3 zeigt ein Ablaufdiagramm eines Verfahrens 200 zur Herstellung eines Kältemittelventils 100, beispielsweise eines Kältemittelventils 100 nach den Fig. 1 und 2.

In einem ersten Verfahrensschritt S1 wird ein Spalttopf 12 aus einem Material mit einer ersten magnetischen Permeabilitätszahl bereitgestellt. Das Material kann ein Metall, insbesondere Edelstahl sein. In einem zweiten Verfahrensschritt S2 werden erste Bereiche 22 und zweite Bereiche 23 des Spalttopfes 12 bestimmt. Dabei können die ersten Bereiche 22 und die zweiten Bereiche 23 derart bestimmt werden, dass die Klauen 19 des Klauenstators 16 im gebauten Zustand des Kältemittelventils 100 in einer Radialrichtung an den zweiten Bereichen 23 angeordnet sind. Die ersten Bereiche 22 und die zweiten Bereiche 23 können auf dem Spalttopf 12 markiert werden, indem ein Abbild der Klauen 19 auf dem Spalttopf 12 aufgebracht wird. In einem dritten Verfahrensschritt S3 wird das Material der zweiten Bereiche 23 des Spalttopfes 12 lokal stark erwärmt. Die Erwärmung kann mittels eines Lasers erfolgen. Zudem kann die Erwärmung sowohl von der Innenseite 27 als auch von der Außenseite 28 des Spalttopfes 12 erfolgen (siehe Fig. 1). Durch das lokale Erwärmen wird das austenitische Metallgefüge lokal verändert, und es stellt sich in den zweiten Bereichen 23 eine größere zweite magnetische Permeabilitätszahl ein. In einem vierten Verfahrensschritt S4 wird der Spalttopf 12 in dem Klauenstator 16 angeordnet, und es wird der Rotor 14 in dem Spalttopf 12 angeordnet. Um eine korrekte Ausrichtung von Spalttopf 12 und Klauenstator 16 zu gewährleisten, kann auf sogenannte Poka-Yoke-Geometrien zurückgegriffen werden. Beispielsweise können am Spalttopf 12 und am Klauenstator 16 komplementäre Geometrien beispielsweise in Form von Nut- und Federanordnungen vorgesehen sein, wodurch eine korrekte Ausrichtung von Klauenstator 16 und Spalttopf 12 gewährleistet wird. Ferner können auch magnetische Kräfte unter Ausnützung der verschiedenen Permeabilitätszahlen in den ersten Bereichen 22 und den zweiten Bereichen 23 zur Ausrichtung des Spalttopfes 12 und Klauenstators 16 verwendet werden.

Fig. 4 zeigt ein Kraftfahrzeug 400 umfassend einen Kältemittelkreislauf 300, wobei der Kältemittelkreislauf 300 ein Kältemittelventil 100, beispielsweise nach Fig. 1 und 2 aufweist.

### Bezugszeichenliste

- 100: Kältemittelventil
- 200: Verfahren
- 300: Kältemittelkreislauf
- 400: Kraftfahrzeug

- 10: Gehäuse
- 11: Ventilgehäuse
- 12: Spalttopf
- 13: Elektromotor
- 14: Rotor
- 15: Stator
- 16: Klauenstator
- 17: Polkörper
- 18: Polkörper
- 19: Klaue
- 20: Umfangsrichtung
- 21: Spule
- 22: Erster Bereich
- 23: Zweiter Bereich
- 24: Kältemittelkanal
- 25: Ventilnadel
- 26: Rotorwelle
- 27: Innenseite
- 28: Außenseite

- S1: Verfahrensschritt
- S2: Verfahrensschritt
- S3: Verfahrensschritt
- S4: Verfahrensschritt

## Patentansprüche

1. Kältemittelventil (100) umfassend ein Ventilgehäuse (11), einen Spalttopf (12) und einen Elektromotor (13) mit einem Rotor (14) und einem Stator (15), wobei der Rotor (14) in dem Spalttopf (12) angeordnet ist, und wobei der Spalttopf (12) in dem Stator (15) angeordnet ist, **dadurch gekennzeichnet, dass** der Spalttopf (12) erste Bereiche (22) mit einer ersten magnetischen Permeabilitätszahl und zweite Bereiche (23) mit einer zweiten magnetischen Permeabilitätszahl aufweist, und dass die zweite magnetische Permeabilitätszahl größer ist als die erste magnetische Permeabilitätszahl.

2. Kältemittelventil (100) nach Anspruch 1, **dadurch gekennzeichnet, dass** das Ventilgehäuse (11) einen Kältemittelkanal (24) aufweist, wobei in dem Kältemittelkanal (24) eine Ventilnadel (25) angeordnet ist, und dass der Elektromotor (13) zum Verfahren der Ventilnadel (25) in dem Kältemittelkanal (24) ausgebildet ist.

3. Kältemittelventil (100) nach Anspruch 1 oder 2, **dadurch gekennzeichnet, dass** die ersten Bereiche (22) und die zweiten Bereiche (23) in einer Umfangsrichtung (20) des Spalttopfes (12) abwechselnd angeordnet sind.

4. Kältemittelventil (100) nach einem der vorgenannten Ansprüche, **dadurch gekennzeichnet, dass** der Stator (15) ein Klauenstator (16) umfassend eine Vielzahl von Klauen (19) ist, und dass die Klauen (19) des Klauenstators (16) in einer Radialrichtung an den zweiten Bereichen (23) angeordnet sind.

5. Kältemittelventil (100) nach einem der vorgenannten Ansprüche, **dadurch gekennzeichnet, dass** der Stator (15), insbesondere die Klauen (19) des Klauenstators (16), eine Vielzahl von Statorblechen umfasst.

6. Verfahren (200) zur Herstellung eines Kältemittelventils (100) nach einem der vorgenannten Ansprüche, umfassend die Schritte Bereitstellen eines Spalttopfes (12) aus einem Material mit einer ersten magnetischen Permeabilitätszahl, Bestimmen von ersten Bereichen (22) und zweiten Bereichen (23) des Spalttopfes (12), Lokales Erwärmen des Materials der zweiten Bereiche (23) des Spalttopfes (12), so dass das Material in den zweiten Bereichen (23) ein zweite magnetische Permeabilitätszahl aufweist, wobei die zweite magnetische Permeabilitätszahl größer ist als die erste magnetische Permeabilitätszahl, Anordnen des Spalttopfes (12) in einem Stator (15) und Anordnen eines Rotors (14) in dem Spalttopf (12).

7. Verfahren (200) nach Anspruch 6, **dadurch gekennzeichnet, dass** das Material ein Metall, insbesondere Edelstahl, ist, und dass durch das lokale Erwärmen ein, insbesondere austenitisches, Metallgefüge lokal verändert wird.

8. Verfahren (200) nach Anspruch 6 oder 7, **dadurch gekennzeichnet, dass** das lokale Erwärmen mittels eines Lasers, bevorzugt von einer Innenseite (27) und/oder einer Außenseite (28) des Spalttopfes (12), erfolgt.

9. Verfahren (200) nach einem der Ansprüche 6 bis 8, **dadurch gekennzeichnet, dass** der Stator (15) ein Klauenstator (16) umfassend eine Vielzahl von Klauen (19) ist, und dass die ersten Bereiche (22) und die zweiten Bereiche (23) derart bestimmt werden, dass die Klauen (19) des Klauenstators (16) im gebauten Zustand des Kältemittelventils (100) in einer Radialrichtung an den zweiten Bereichen (23) angeordnet sind, wobei bevorzugt ein Abbild der Klauen (19) auf dem Spalttopf (12), bevorzugt auf einer Innenseite (27) und/oder einer Außenseite (28) des Spalttopfes (12), aufgebracht wird.

10. Verfahren (200) nach einem der Ansprüche 6 bis 9, **dadurch gekennzeichnet, dass** der Stator (15) relativ zum Spalttopf (12) ausgerichtet wird, wobei das Ausrichten mittels komplementären Geometrien des Spalttopfes (12) und des Stators (15) oder unter Verwendung magnetischer Kräfte erfolgt.

11. Kältemittelkreislauf (300) umfassend mindestens ein Kältemittelventil (100) nach einem der Ansprüche 1 bis 5.

12. Kraftfahrzeug (400), insbesondere ein batterieelektrisches Fahrzeug, mit einem Kältemittelkreislauf (300) nach Anspruch 11.
